(19) **Europäisches Patentamt European Patent Office Office européen des brevets**

(11) **EP 4 113 062 B1**

(12) **EUROPEAN PATENT SPECIFICATION**

(45) Date of publication and mention of the grant of the patent:
**11.12.2024 Bulletin 2024/50**

(21) Application number: **21305895.1**

(22) Date of filing: **29.06.2021**

(51) International Patent Classification (IPC):
**G01C 21/00** (2006.01)     **G05B 13/02** (2006.01)

(52) Cooperative Patent Classification (CPC):
**G05B 13/0265; G06N 7/01**

(54) **SYSTEM AND METHOD FOR GENERATION OF ACTION STRATEGIES BY AN AUTONOMOUS SYSTEM**

**SYSTEM UND VERFAHREN ZUR ERZEUGUNG VON AKTIONSSTRATEGIEN DURCH EIN AUTONOMES SYSTEM**

**SYSTÈME ET PROCÉDÉ DE GÉNÉRATION DE STRATÉGIES D'ACTION PAR UN SYSTÈME AUTONOME**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA**

(43) Date of publication of application:
**04.01.2023 Bulletin 2023/01**

(73) Proprietors:
• **Université de Caen Normandie**
  **14032 Caen Cedex 5 (FR)**
• **Centre National de la Recherche Scientifique - CNRS**
  **75794 Paris Cedex 16 (FR)**
• **Ecole Nationale Supérieure d'Ingénieurs de Caen**
  **14050 Caen Cedex 4 (FR)**

(72) Inventors:
• **MOUADDIB, Abdel-Ilah**
  **14032 Caen (FR)**
• **JEANPIERRE, Laurent**
  **14610 Epron (FR)**

(74) Representative: **BCF Global**
  **Centre d'Entreprise et d'Innovation**
  **17-21, rue Saint-Fiacre**
  **75002 Paris (FR)**

(56) References cited:
**US-A- 6 122 572**     **US-A1- 2011 184 604**
**US-A1- 2013 080 360**     **US-A1- 2021 173 700**

**Description**

**FIELD**

The present technology relates to systems and methods for generation of action strategies and, more particularly, to intelligent autonomous systems interacting within their environment.

**BACKGROUND**

Recent developments in autonomous decision-making processes has been a major step in developing autonomous systems. Potential applications cover a wide range of domains such as, but not limited to, assistive humanoid robotic systems, or network flow monitoring and managing systems. Autonomous systems are expected to perform tasks to satisfy a user, an interacting human, or any object requiring assistance while abiding by predefined and/or changing rules. Such autonomous systems developed for handling various activities include one or more data processing and decision-making units, which are used to process data and generate optimal action strategies.

Even though the recent developments identified above may provide benefits, improvements are still desirable.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

U.S. Patent Application Publication No. 2013/0080360 discloses autonomic computing, robotics, and security devices, systems, and methods wherein agents of the system can communicate with one another and can self-destruct under event conditions that would render the agent detrimental to the overall system.

**SUMMARY**

Embodiments of the present technology have been developed based on developers' appreciation of shortcomings associated with the prior art.

In particular, such shortcomings may comprise (1) inability of reacting when facing an unexpected event; (2) long computation time for establishing an action strategy resulting in potential interruptions while operating in a given environment; and/or (3) unsuitability of static strategies of actions in a dynamic environment.

In a first aspect, various implementations of the present technology provide a method for generating an action strategy to be executed by an autonomous system, the action strategy comprising a series of actions to be performed by the autonomous system to accomplish a corresponding active objective in response to detecting an abnormal event, the abnormal events occurring or having occurred in an environment where the autonomous system is configured to operate, the abnormal event being identified as incoherent based on a result of a coherence checking procedure between a description of the corresponding event and properties of the environment. The method comprises accessing a first database populated with event descriptions corresponding to abnormal events detected by the autonomous system. The method comprises accessing a second database populated with candidate objectives. Each candidate objective defines a task accomplishable by the autonomous system and comprises an activation condition corresponding to one or more event descriptions, the activation condition being fulfilled if determination is made that the corresponding one or more event descriptions are found in the first database; and a progressive task unit structure describing a hierarchy of actions to be performed in order to accomplish the corresponding candidate objective, the progressive task unit structure comprising executable modules configured to be executed by the autonomous system to perform the corresponding hierarchy of actions, each executable module corresponding to an action of the hierarchy of actions. The method comprises selecting one or more candidate objectives from the second database by determining whether the activation conditions of the one or more candidate objectives are fulfilled based on the event descriptions; and executing the one or more candidate objectives. An execution of a candidate objective comprises transferring parameters of at least one of the event descriptions that caused the selection of the candidate objective to the candidate objective, thereby defining an active objective; generating an action strategy from the progressive task unit structure of the active objective, a series of actions of the action strategy corresponding to actions corresponding to the executable modules of the progressive task unit structure; and executing the series of actions of the action strategy.

In some embodiments of the method, event descriptions of the first database correspond to abnormal events detected by the autonomous system, each of the abnormal events being identified as incoherent based on a result of a coherence checking procedure between an event description of the corresponding event and properties of the environment, and wherein accessing the first database is made in response to detecting, by the autonomous system, an abnormal event.

In some embodiments of the method, the progressive task unit structures further comprise one or more sequence of processing levels, each sequence of processing levels comprising one or more of the executable modules; a set of state variables describing parameters of a state of an execution of the candidate objective; a set of observable properties, an observable property corresponding to one or more of the event descriptions of the first database; or a combination thereof.

In some embodiments of the method, each executable module of the progressive task unit structures corresponds to configuration of a sub-set of state variables of the set of state variables of the corresponding progressive task unit structure, and, if determination is made that, for a given executable module, a corresponding configuration is not fulfilled upon execution of the action corresponding to the given executable module, said action is identified as a failure of the autonomous system.

In some embodiments of the method, the progressive task unit structure of at least one of the candidate objectives further comprises a failure recovery module configured to be executed by the autonomous system to recover from a corresponding failure of the autonomous system, the corresponding failure of the autonomous system being identified based on a mismatch of the set of state variables and configurations of sub-set of state variables corresponding to the executable module of the at least one progressive task unit structure.

In some embodiment of the method, the at least one of the candidate objective further comprises one or more failure recovery progressive task unit structures comprising a hierarchy of resource-bounded actions to be performed, each failure recovery progressive task unit structure corresponding to a failure recovery module of a progressive task unit structure, execution of the failure recovery module causing an execution of the resource-bounded actions of the failure recovery progressive task unit structure by the autonomous system.

In some embodiments of the method, the executable modules are further associated with an execution score for executing corresponding executable modules, and generating the executable action strategy comprises maximizing a global execution score, the global execution score being a combination of the execution scores associated with the executable modules.

In some embodiments of the method, the execution scores of the executable modules are weighted by execution probabilities of the corresponding executable modules for determining the global execution score, an execution probability describing a probability of an execution of the corresponding executable module by the autonomous system.

In some embodiments of the method, generating the action strategy from the progressive task unit structure of the candidate objective comprises generating a stochastic decision process from the progressive task unit structure. The stochastic decision process comprises at least a set of actions corresponding to the actions of the executable modules of the progressive task unit structure; and a set of states comprising states of the autonomous system, each state corresponding to an outcome of an execution of an executable module. The method comprises executing the stochastic decision process.

In some embodiments of the method, the stochastic decision process is a factored Markov decision process.

In some embodiments of the method, one or more actions corresponding to the executable modules cause an execution of one or more candidate objectives.

In a second aspect, various implementations of the present technology provide a computer-implemented method for planning actions to be executed by an autonomous system to fulfill one or more objectives by accomplishing one or more corresponding tasks. The method comprises accessing a set of one or more objectives. Each of the one or more objectives comprises parameters identifying characteristics of the corresponding one or more objectives. The method comprises accessing a first database comprising progressive task unit structures, each progressive task unit structure comprising a hierarchy of actions to accomplish a corresponding task described by executable modules and failure recovery modules, each executable module being configured to be executed by the autonomous system to perform a resource-bounded action of the hierarchy of action. Each failure recovery module is configured to be executed by the autonomous system when determination is made that the autonomous system failed to perform an action corresponding to an executable module to pursue an accomplishment of the corresponding task. The method comprises accessing a second database comprising failure recovery progressive task unit structures comprising a hierarchy of resource-bounded actions to be performed, each failure recovery progressive task unit structure corresponding to a failure recovery module of a progressive task unit structure. An execution of the failure recovery module causes an execution of the resource-bounded actions by the autonomous system. The method comprises selecting one or more progressive task unit structures from the first database based on the parameters of the one or more objectives, each objective corresponding to a progressive task unit structure and executing the selected one or more progressive task unit structures. The execution comprises generating one or more stochastic decision processes from the selected one or more progressive task unit structures. Each stochastic decision processes comprises a set of actions corresponding to the actions of the executable modules and failure recovery modules of the progressive task unit structure; and a set of states corresponding to outcomes of the actions of the executable modules. The method comprises executing the one or more stochastic decision processes by performing one or more actions of the set of actions based on a current state of the autonomous system; and, upon executing the selected one or more progressive task unit structures, if determination is made that the autonomous system is to perform an action corresponding to a failure recovery module, executing the hierarchy of resource-bounded actions of the failure recovery progressive task unit structure of the failure recovery module.

In some embodiments of the method, executing the hierarchy of resource-bounded actions of the corresponding failure recovery progressive task unit structure comprises generating a stochastic decision process from the failure recovery progressive task unit structure. The stochastic decision process comprises a set of actions corresponding to the resource-bounded actions of the failure recovery progressive task unit structure; and a set of states corresponding to outcomes of the resource-bounded actions. The method comprises executing the stochastic decision process by performing one or more actions of the set of actions based on a current state of the autonomous system.

In some embodiments of the method, the stochastic decision process is a factored Markov decision process.

In some embodiments of the method, each executable module is associated with a subset of state variables describing parameters of a state of an execution of the candidate objective; and generating one or more stochastic decision processes from the selected one or more progressive task unit structures comprises selecting executables modules of the selected one or more progressive task unit structures that correspond to predetermined state variables. potential interruptions while operating in a given environment; and/or (3) unsuitability of static strategies of actions in a dynamic environment.

The object of the invention is solved by a method according to claim 1, a system according to claim 11 and a non-transitory computer-readable medium 12. Preferred embodiments are presented in the dependent claims.

In the context of the present specification, unless expressly provided otherwise, a computer system may refer, but is not limited to, an "electronic device", an "operation system", a "system", a "computer-based system", a "controller unit", a "monitoring device", a "control device" and/or any combination thereof appropriate to the relevant task at hand.

In the context of the present specification, unless expressly provided otherwise, the expression "computer-readable medium" and "memory" are intended to include media of any nature and kind whatsoever, non-limiting examples of which include RAM, ROM, disks (CD-ROMs, DVDs, floppy disks, hard disk drives, etc.), USB keys, flash memory cards, solid state-drives, and tape drives. Still in the context of the present specification, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

Implementations of the present technology each have at least one of the above-mentioned objects and/or aspects, but do not necessarily have all of them. It should be understood that some aspects of the present technology that have resulted from attempting to attain the above-mentioned object may not satisfy this object and/or may satisfy other objects not specifically recited herein.

**Continued on page 6a**

Additional and/or alternative features, aspects and advantages of implementations of the present technology will become apparent from the following description, the accompanying drawings and the appended claims.

**BRIEF DESCRIPTION OF THE DRAWINGS**

For a better understanding of the present technology, as well as other aspects and further features thereof, reference is made to the following description which is to be used in conjunction with the accompanying drawings, where:

Figure 1 is a computer system suitable for use in accordance with an embodiment of the present technology;

Figure 2 is a high-level schematic diagram of an autonomous system in accordance with an embodiment of the present technology;

Figure 3 is a high-level schematic of a progressive task unit structure in accordance with one embodiment of the present technology;

Figure 4 is a descriptive table of a progressive task unit structure in accordance with one embodiment of the present technology;

Figure 5 is a sequence diagram showing operations of a method for generating an action strategy in accordance with one embodiment of the present technology;

Figure 6 is a representation of an action strategy in accordance with an embodiment of the present technology;

Figure 7 is a representation of another action strategy in accordance with an embodiment of the present technology; and

Figure 8 is a finite-state machine of an action strategy in accordance with one embodiment of the present technology.

It should also be noted that, unless otherwise explicitly specified herein, the drawings are not to scale.

## DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a general-purpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

The present technology provides more self-sufficiency to autonomous systems by enabling such systems to generate and execute optimal action strategies, or "action policies", based on the available resources. An action strategy may comprise a series of actions to be performed to accomplish a task, where an execution of an action may be adjusted in real-time, or close to real-time, based on executions conditions such as outcomes of other actions, available resources and/or other possible execution conditions. An action strategy may be referred to as an action plan that may be adjusted at any time. Therefore, the systems may be able to sense and interact with a surrounding environment.

Besides, the autonomous system implemented in accordance with the present technology may be able to adapt a strategy in real-time and react to unexpected events, or "abnormal" events, and/or states in order to accomplish the task in the most efficient and satisfying manner. Furthermore, the autonomous system may be able to respond to situations that arise before or during execution of a task.

Various aspects of the present disclosure generally address one or more of the problems found in conventional autonomous systems. To this end, the present disclosure, amongst other aspects, introduces intelligent autonomous system configured to generate and execute assistive action strategies.

With these fundamentals in place, we will now consider some non-limiting examples to illustrate various implementations of aspects of the present technology.

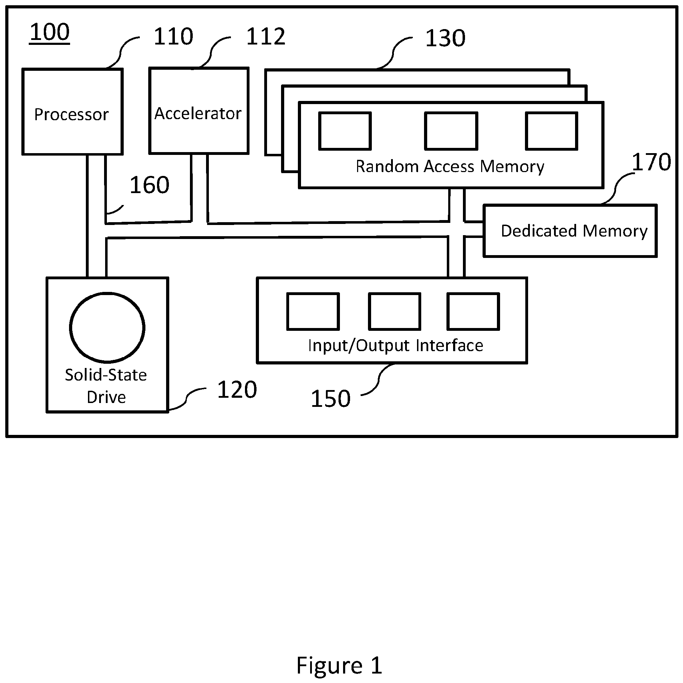

With reference to Figure 1, there is shown a computer system 100 suitable for use in accordance with at least some embodiments of the present technology. The computer system 100 may be implemented by any of a conventional personal computer, a network device and/or an electronic device (such as, but not limited to, a mobile device, a tablet device, a server, a controller unit, a control device, etc.), and/or any combination thereof appropriate to the relevant task at hand. In some embodiments, the computer system 100 comprises various hardware components including one or more single or multi-core processors collectively represented by processor 110, a solid-state drive 120, a random-access memory 130, and an input/output interface 150. The computer system 100 may be a computer specifically designed to operate a machine learning algorithm (MLA). The computer system 100 may be a generic computer system. The computer system 100 may be integrated in a robotic vehicle and/or may be configured to control a robotic vehicle.

In some embodiments, the computer system 100 may also be a subsystem of one of the above-listed systems. In some other embodiments, the computer system 100 may be an "off-the-shelf" generic computer system. In some embodiments, the computer system 100 may also be distributed amongst multiple systems. The computer system 100 may also be specifically dedicated to the implementation of the present technology. As a person in the art of the present technology may appreciate, multiple variations as to how the computer system 100 is implemented may be envisioned without departing from the scope of the present technology.

Those skilled in the art will appreciate that processor 110 is generally representative of a processing capability. In some embodiments, in place of or in addition to one or more conventional Central Processing Units (CPUs), one or more specialized processing cores may be provided. For example, one or more Graphic Processing Units 111 (GPUs), Tensor Processing Units (TPUs), and/or other so-called accelerated processors (or processing accelerators) may be provided in addition to or in place of one or more CPUs.

System memory will typically include random access memory 130, but is more generally intended to encompass any type of non-transitory system memory such as static random access memory (SRAM), dynamic random access memory (DRAM), synchronous DRAM (SDRAM), read-only memory (ROM), or a combination thereof. Solid-state drive 120 is shown as an example of a mass storage device, but more generally such mass storage may comprise any type of non-transitory storage device configured to store data, programs, and other information, and to make the data, programs, and other information accessible via a system bus 160. For example, mass storage may comprise one or more of a solid-state drive, hard disk drive, a magnetic disk drive, and/or an optical disk drive.

Communication between the various components of the computer system 100 may be enabled by a system bus 160 comprising one or more internal and/or external buses (e.g., a PCI bus, universal serial bus, IEEE 1394 "Firewire" bus, SCSI bus, Serial-ATA bus, ARINC bus, etc.), to which the various hardware components are electronically coupled.

The input/output interface 150 may provide networking capabilities such as wired or wireless access. As an example, the input/output interface 150 may comprise a networking interface such as, but not limited to, a network port, a network socket, a network interface controller and the like. Multiple examples of how the networking interface may be implemented will become apparent to the person skilled in the art of the present technology. For example, the networking interface may implement specific physical layer and data link layer standards such as Ethernet, Fibre Channel, Wi-Fi or any other radio data link protocol, Token Ring or Serial communication protocols. The specific physical layer and the data link layer may provide a base for a full network protocol stack, allowing communication among small groups of computers on the same local area network (LAN) and large-scale network communications through routable protocols, such as Internet Protocol (IP).

The input/output interface 150 may be coupled to a touchscreen 190 and/or to the one or more internal and/or external buses 160. The touchscreen 190 may be part of the display. In some embodiments, the touchscreen 190 is the display. The touchscreen 190 may equally be referred to as a screen 190. In the embodiments illustrated in Figure 1, the touchscreen 190 comprises touch hardware 194 (e.g., pressure-sensitive cells embedded in a layer of a display allowing detection of a physical interaction between a user and the display) and a touch input/output controller 192 allowing communication with the display interface 140 and/or the one or more internal and/or external buses 160. In some embodiments, the input/output interface 150 may be connected to a keyboard (not shown), a mouse (not shown), a trackpad (not shown), a vocal Human-Machine Interface (HMI) (not shown) and/or any other device suitable for allowing the user to interact with the computer system 100 in addition to or instead of the touchscreen 190.

According to some implementations of the present technology, the solid-state drive 120 stores program instructions suitable for being loaded into the random-access memory 130 and executed by the processor 110 for executing acts of one or more methods described herein. For example, at least some of the program instructions may be part of a library or an application.

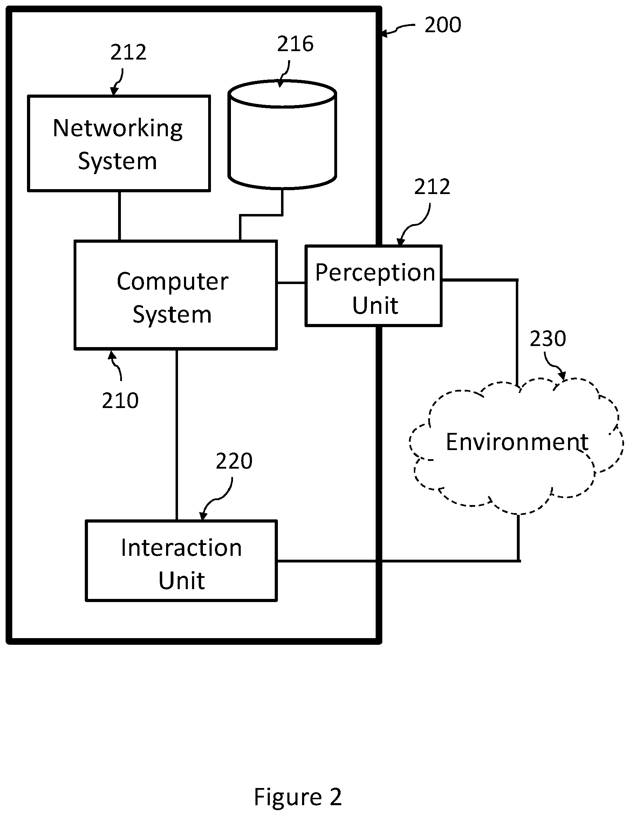

Figure 2 illustrates a high-level schematic diagram of an autonomous system 200 in accordance with an embodiment of the present technology. The autonomous system 200 may comprise a computer system 210. The computer system 210 may be the computer system 100 and/or may include some or all of the components of the computer system 100. The computer system 210 may be internal or external with respect to the autonomous system 200. In one embodiment, the computer system 210 may be external and communicably connected to a plurality of autonomous systems 200 via a network (not shown).

The autonomous system 200 may operate within an environment 230 and may conduct assistive actions. The environment 230 may be without limitation a physical environment, such as a shopping center, an office or the like, or may be a logical environment, such as a computing device network, an electrical grid, or the like. The environment 230 may include entities such as, without limitation, shops, doors, corridor, people or any other entity whose features may be relevant to perform an assistive task in the case of a physical environment 230; and processors, networking devices, interfaces or any other entity whose features may be relevant to perform an assistive task in the case of a logical environment 230. Therefore, the entities and relations between the entities may be used to define the environment 230.

The autonomous system 200 is configured to capture raw data in the environment 230 via a perception unit 212. The perception unit 212 may comprise a Human-Machine interface, sensors such as cameras, LiDAR sensors or any type of sensing devices adapted for a physical environment 230, and may comprise ammeters, dataflow sensors, connexion indicators, or any type of sensors adapted for a logical environment 230. The raw data may be processed by the computer system 210 communicably connected to the perception unit 212. The perception unit 212 may be configured to execute signal processing and/or computer vision software applications to detect the occurrence of an event.

The computer system 210 may be configured to generate event descriptions of events occurring in the environment 230 and further identify abnormal events. In an embodiment, the computer system 210 may store event descriptions of the abnormal events in a database 216. In this embodiment or in yet a distinct embodiment, identifying a given event as "abnormal" is made by executing a coherence checking procedure between its corresponding event description and properties of the environment 230. Said coherence checking routines may comprise representing events under computer-readable format, accessing pre-defined common-sense rules and/or semantic knowledge of the environment 230 and further execute comparison of said event descriptions with common-sense rules and/or semantic knowledge using rule-based forward reasoning. If an event is found to be inconsistent with at least one common-sense rule or a semantic knowledge, said event may be identified as abnormal. Therefore, a list of abnormal events may be generated and updated with new abnormal events as events are detected by the perception unit 212. Other coherence checking procedures to identify an event as "abnormal" are contemplated in alternative embodiments.

In an embodiment, the database 216 may be embedded in the autonomous system 200 or located in an external physical location. The computer system 210 may be configured to access a content of the database 216 via a network (not shown) such as a Local Area Network (LAN) and/or a wireless connexion such as a Wireless Local Area Network (WLAN) or any non local network (WAN).

The database 216 may also comprise candidate objectives. The candidate objectives may be stored in another database (not shown) communicably connected to the autonomous system 200. One or more candidate objectives may be activated by the computer system 210 upon detection of corresponding abnormal events, thereby defining one or more corresponding "active objectives", or simply "objectives". The active objectives may be further executed and/or transmitted to an operator of the autonomous system 200 to address the corresponding abnormal event. Similarly, the active objectives may be stored in the database 216. Therefore, a list of active objectives may be generated and updated as new abnormal are detected and new active objective are defined based on said new abnormal events. For instance, if a person identified as *p1* is detected as lying on the ground, this event may be identified as abnormal. A candidate objective corresponding to a detection of a person lying on the ground may then be activated to help the person *p1.* In this situation, the candidate objective may be a function *help(),* and the corresponding active objective may be the function associated with the parameter *p1: help(p1).*

Each candidate objective may comprise computer-readable instructions and may be described by an activation condition, or "selection condition", an identifier, an objective category (e.g. surveillance, assistance, guidance, advertisement, etc), parameters describing variable states such as location, time, object, person, etc, and a progressive task unit structure, or a combination thereof, in the following manner:

Objective(activation_condition, identifier, objective category, parameters, progressive task unit structure).

Progressive task unit structures are described in greater details hereinafter.

An activation condition of a candidate objective may correspond to one or more abnormal events. The activation condition is fulfilled if determination is made by the computer system 210 that the corresponding one or more abnormal events have been detected by the perception unit 212.

An active objective may be generated, or "derived", from a candidate objective by updating the parameters of the candidate objective with the parameters of the one or more abnormal events that caused the activation conditions of the corresponding candidate objective to be fulfilled. In other words, at least one parameter of the event descriptions that caused the selection of the candidate objective is transferred from the event descriptions to the candidate objective. As an example, a candidate objective is presented hereinbelow:

Objective(lying(p), id, help, {person}, progressive task unit structure)

If the person *p1* is lying on the ground, then the previous candidate objective is activated, and the following active objective is generated:

Objective(lying(*p1*), id, help, *p1*, Assist progressive task unit structure), *p1* being the parameter of the abnormal event.

The autonomous system 200 may comprise an interaction unit 220 configured to cause the autonomous system 200 to interact within the environment 230 by executing actions corresponding to the active objectives. The interaction unit 220 may operate interactive elements such as a human-machine interface, one or more screens, speakers, microphone, physical actuators, a driving system or any suitable system that may be used to interact within a physical environment if the environment 230 is a physical environment, or logical actuators, a processor, or any suitable system that may be used in a logical environment if the environment 230 is a logical environment.

In order to lighten the present disclosure, following examples relates to a physical environment 230. This is done merely to ease the reading of the present disclosure, and, again, not to define the scope or set forth the bounds of the present technology. The present technology and method described hereinafter may be independent from the autonomous system 200 and may be used in other fields of application.

An aspect of the present technology is to provide a method for generating action strategies based on a list of objectives to be fulfilled. To that end, each candidate objective may comprise a progressive task unit structure. Progressive task unit structures may comprise series of actions, instructions and/or any other forms of indication of actions that may be performed to incrementally accomplish the task corresponding to its candidate objective. An illustrative embodiment of progressive task unit structures is described in greater details hereinafter.

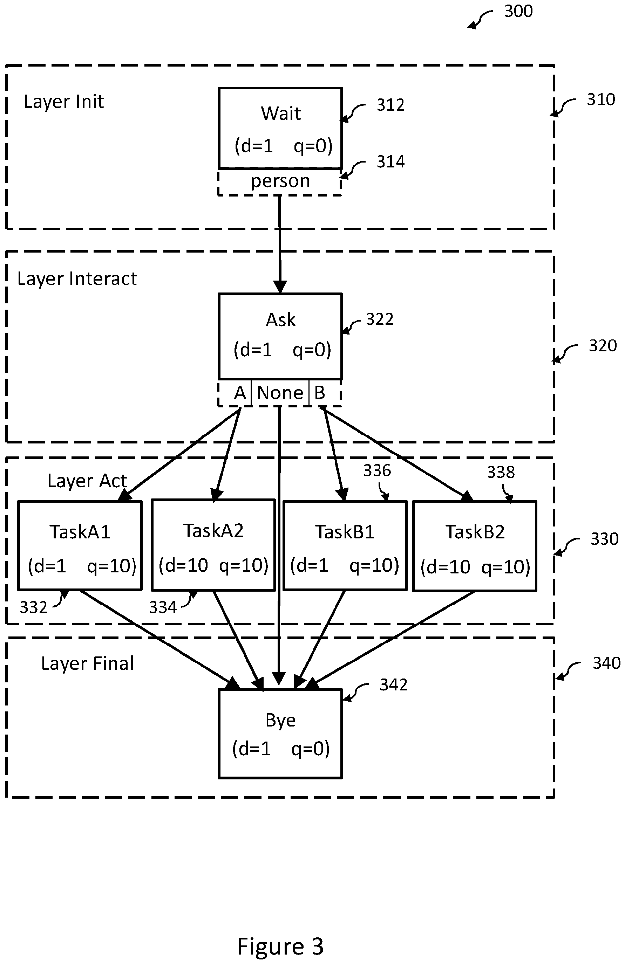

Turning now to Figure 3, a high-level schematic of a progressive task unit structure 300 corresponding to an objective is illustrated in accordance with one embodiment of the present technology. Each progressive task unit structure describes tasks, or "actions", to be performed in order to accomplish the corresponding objective and comprises one or more executable modules for performing the tasks. In other words, the progressive task unit structure 300 may describe a hierarchy of actions, each action corresponding to an executable module of the progressive task unit structure 300. The executable modules are configured to be executed when the corresponding progressive task unit structure is executed. The computer system 210 may generate a corresponding optimal action strategy, or simply "action strategy", from a progressive task unit structure. The following description provide an illustrative representation of a progressive task unit structure.

A progressive task unit may be encoded in an Extensible Markup Language (XML) file and may comprise a sequence of processing levels $L = (l_0, l_1, ... , l_{|L|})$, a set of state variables $X = \{X_1, X_2, ..., X_{|X|}\}$, and a set of observable Boolean properties of the environment $O = \{o_1, o_2, ..., o_{|O|}\}$, where $|L|$, $|X|$, $|O|$ are finite, and $|L|$, $|X|$, $|O| \geq 0$. Each state variable $X_i$ can be assigned a value within a set of finite values, i.e., $X_i \in H_i = \{ \perp, h_{1_i} , ..., hi_{|Hi|}\}$ , with $H_i$ is finite, and $\perp$ denoting a special null value.

Each processing level $l_i$ may be composed of a set of executable modules, or simply "modules", $M_i = \{m^1_i, ..., m_i^{|Mi|}\}$ and may be associated to a set of active state variables, or "focalisation variables", $V_i \subset X$, the active state variables being a sub-set of the state variables X. Additionally or alternatively, each module may correspond to a distinct sub-set of state variables. We denote with $M = \cup_{i=1, ...,|M|} M_i$ the set of all the modules in all levels of a progressive task unit structure. Each module $m_i^j$ may be defined by a non-empty set of options $\{\alpha_i^j, \beta_i^j, .." \chi_i^j\}$, representing possible outcomes of its execution. The symbols used to denote an option (e.g., $\alpha_i^j$,) may be set as unique identifiers in all the progressive task unit structures. Each option may be associated with one or more of the following attributes:

- an execution condition $\alpha_i^j.\psi$: a specific configuration of the observable Boolean properties of the environment 130 in O. The configuration represents an observable condition used at execution time to determine that the corresponding outcome has occurred. If the execution condition is satisfied, one or more corresponding successor executable modules may be executed. In other word, the execution condition may correspond to events detected by the perception unit 212 indicative of an outcome of the execution of a previous module. The execution conditions corresponding to the options of a given executable module may be mutually exclusive.

- a probability $\alpha_i^j.p$: a probability of occurrence of the corresponding outcome, or "execution probability" of the corresponding executable module; the sum of all the probability values for all the options in a module being equal to 1. The probabilities of occurrence differentiate the present technology from standard planning techniques as they may be learned by the autonomous system 200 during operation, using, for instance, MLA techniques. Indeed, standard planning techniques may consider that an execution of one action may only have one outcome. As an example, in standard planning technique, if the autonomous system is to open a door, a corresponding outcome of this action at planning time is that the door will be open. However, this do not take the probability that the door may be locked or broken, into account. The computer system 210 may establish the probabilities of occurrence of the outcomes based on experiences during operation of the autonomous system and/or using MLA techniques.

- a execution score, or "quality", $\alpha_i^j.q$: an estimated score for achieving this outcome. The execution score may be a constant value or a function of state variables X. It may be used to generate the action strategy to indicate which executable modules should be preferentially executed to perform the corresponding task.

- a duration $\alpha_i^j.d$: an estimated time for achieving this outcome. In one embodiment, d is representative of an estimated amount of a specific resource for performing the actions. For instance, d may be representative of a memory size needed to perform the action, or an estimated amount of battery of the autonomous system 200 needed to perform the action. The duration may be expressed either as a constant value or as a function of state variables.

- one or more successor executable modules $\alpha_i^j.SM$: a set of successor executable modules that are enabled after the corresponding outcome. In the same or another embodiment, successor executable modules are either at the same level or at a following level with respect to the current one.

- one or more state variable updates $\alpha_i^j.SVU$: a set of state variable assignments that must be considered after this outcome, the state variable corresponding to a description of a state of the autonomous system 200. Upon determination that the corresponding outcome occurred, one or more state variable may be updated: $(X_k \leftarrow h'_k) \in \alpha_i^j.SVU$, with $X_i \in V_i$ considering that only state variables corresponding to the current level may be updated, and $h'_i \in H_i$.

As it will be explained in greater details, the computer system 210 may thus accomplish a task incrementally, one processing level after the other, to adapt a depth of an accomplishment according to resources available to the autonomous system 200.

The progressive task unit structure 300 may correspond to an objective to be fulfilled by causing the autonomous system 200 to interact with a user. Therefore, the progressive task unit structure 300 may comprise actions to be performed for waiting a user and interacting with said user.

In this illustrative progressive task unit structure 300, the autonomous system 200 may execute two activities A and B upon request of the user. However, the user may not be aware of these abilities. The autonomous system 200 may be initially in a waiting state. Whenever a user is detected in front of the robot, the autonomous system 200 may start an interaction with the user to describe the activities A and B that it may perform. The user may then select one of them or answer that she/he is not interested. If an activity is selected, the autonomous system 200 executes a task for performing it. Each activity may be performed by executions of two alternatives tasks TaskA1 and TaskA2 for activity A and TaskB1 and TaskB2 for activity B. After the execution of the task, the autonomous system 200 may return to the wait state, waiting for a next user.

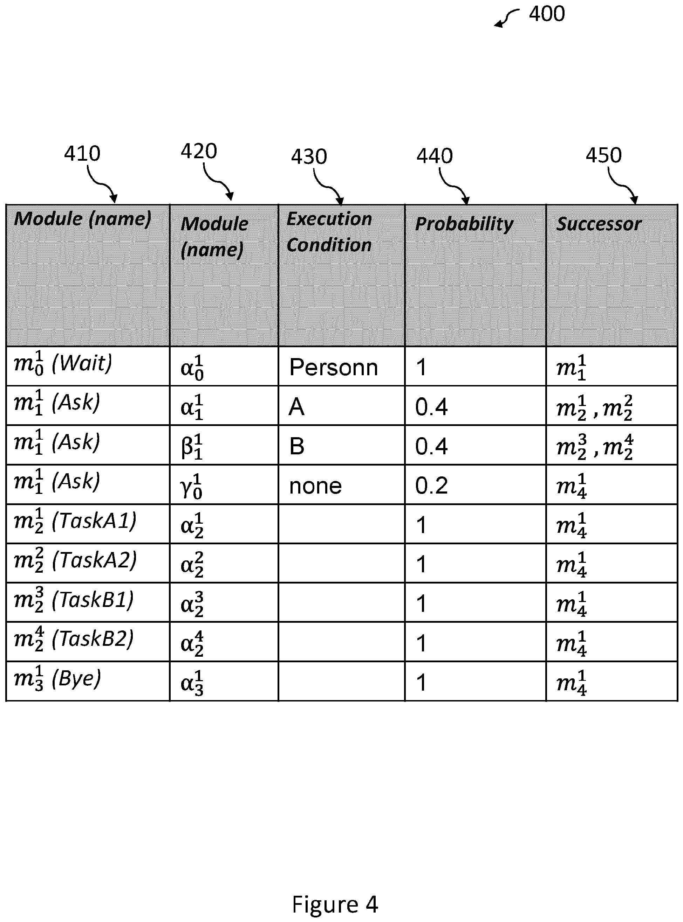

The illustrative progressive task unit structure 300 comprises three processing levels: an initial layer 310 comprising executable module 312, an interaction layer 320 comprising executable module 322, an action layer 330 comprising executable modules 332, 334, 336 and 338, and a final layer 340 comprising an executable module 342. In this illustrative example, X is empty and O = {person; A; B; none}. Specific values for duration (d representative of a time resource) and quality (q) are indicated on Figure 3 in the corresponding executable modules, while probability of the outcomes and the list of executable modules M is illustrated in Figure 4.

During the interaction with the user, the following inconveniences may occur: the user does not complete the interaction by not answering to the autonomous system 200 for instance, any action may fail for reasons not defined in the progressive task unit structure 300, and/or any action may be aborted according to some external commands and/or conditions.

To provide robustness to the present technology, each executable module may be associated with a predetermined configuration of a subset of the state variable X. For instance, a first executable module corresponding to an illustrative action of taking a picture with a camera may be associated with the following configuration of state variables: {camera: ON, battery: HIGH}, the state variables being the camera state, "camera", and a level of battery, "battery", of the autonomous system 200.

The action corresponding to the first executable module may be identified as a failure, or a "failure state" of the autonomous system 200, if determination is made that the configuration of said first executable module is not fulfilled. For instance, if the camera is off and/or the battery is low, the autonomous system may be declared in a failure state. The progressive task unit structure may comprise failure recovery modules configured to be executed when the autonomous system 200 is declared in a failure state. As it will be explained in greater details hereinafter, failure recovery module represents resource-bounded action that may be executed by the computer system 210 when determination is made that the autonomous system 200 failed to perform an action corresponding to an executable module to pursue an accomplishment of a corresponding task with limited resources. In other words, a failure recovery module may be executed when determination is made that state variables, or sub-set of state variables, have one or more specific combinations of values.

The failure recovery modules may correspond to one or more configurations of state variables. A failure recovery module may therefore encompass different failure situations and be executed to recover from said situations.

Referring back to the previous example, if the first executable module is to be executed and the configuration of state variables is {camera: OFF, battery: HIGH}, then the autonomous system may not capture an image with the camera. A failure recovery module corresponding to the configuration of state variable {camera: OFF, battery: HIGH or LOW} may be comprised in the progressive task unit structure to cause the autonomous system to go to a repair station for instance. Possible failures of actions may be therefore anticipated prior execution of action strategies by indicating a resource bounded action to be performed in case of failure, with failure recovery modules.

The progressive task unit structure described herein encompasses a formalism to describe a task. In this embodiment, a progressive task unit structure is formalized as a hierarchy representing different ways to accomplish a corresponding task such that an ability to adapt a depth and a refinement of a task accomplishment according to available resources is provided. The skilled person would understand that the present technology may describe a unified planning language and that Hierarchical Task Networks (HTN), Dynamic Bayes Networks (DBN), and Algebraic Decision Diagrams (ADB) may be retrieved and/or derived from a progressive task unit structure.

Figure 4 is a descriptive table 400 of a progressive task unit structure in accordance with one embodiment of the present technology. The descriptive table 400 comprises a list 410 of the name of the executable modules of the progressive task unit structure 300 in combination with their respective options 420. Each combination of executable and option is associated with its corresponding execution condition in column 430, its corresponding probability in column 440 and its successor executable modules in column 450 of the descriptive table 400.

For instance, the executable module 322 of the progressive task unit structure 300, namely executable module mi in the descriptive table 400, comprises three options: $\alpha_1^1$ corresponding to the outcome where the user selected the activity A, $\beta_1^1$ corresponding to the outcome where the user selected the activity B, and $\gamma_1^1$ corresponding to the outcome where the user selected neither of them.

The progressive task unit structures may be represented as a tree structure illustrated on Figure 3, as a description table as illustrated on Figure 4, or as any other suitable manner with equivalent features. The illustration of Figure 3 and Figure 4 are set as an aid to understanding and not to set forth the bounds of the present technology. This aspect is not limitative.

The computer system 210 may comprise a planning module configured to derive an action strategy from a progressive task unit structure such as the progressive task unit structure 300, an execution of the action strategy resulting in accomplishing the active objective corresponding to said progressive task unit structure. Therefore, the executable action strategy depends on the progressive task unit structures and the state variables of the autonomous system 200. In one embodiment, the planning module may be configured to generate one action strategy for each candidate objective received by the computer system 210.

In one embodiment, the planning module may merge a plurality of action strategies corresponding to a plurality of active objectives into one global action strategies by merging the progressive unit structures of the objectives and generating an executable action strategy based on the merging of the progressive unit structures. Merging the progressive unit structures may be made by concatenating their respective description table 500.

In the same or another embodiment, the planning module uses stochastic decision processes to generate the executable action strategy, formalized as a factored Markov decision process (MDP). An MDP is a discrete-time stochastic control process. It consists of a mathematical framework configured for modeling decision making in situations where outcomes may be partly uncertain and partly under the control of a decision maker, namely a user. As persons skilled in the art would understand, various implementations of a process to compute optimal policy based on the progressive task unit structures may be possible while nonetheless remaining within the scope of the present technology.

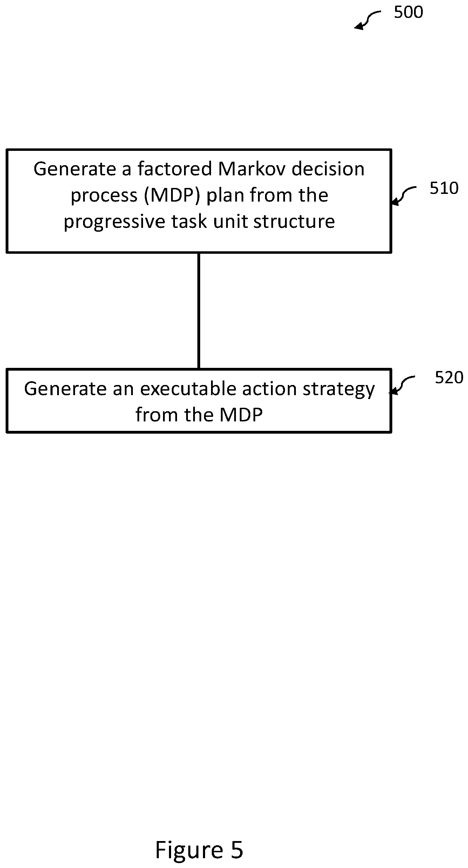

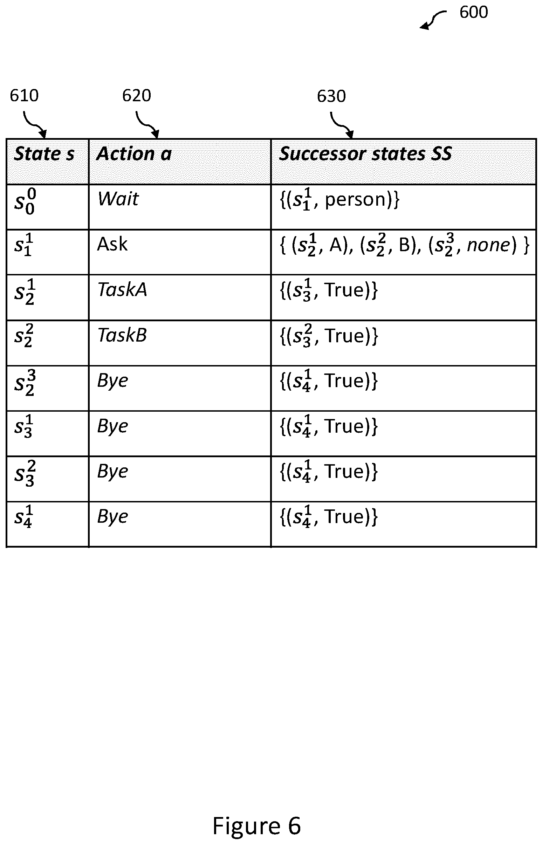

Figure 5 is a sequence diagram showing operation of a method for executing a progressive task unit structure to generate an action strategy in accordance with one embodiment of the present technology. The planning module may be configured to execute the operations illustrated in Figure 6. An MDP is generated based on the progressive task unit structure at step 510, the generation of the MDP being described hereinbelow.

Given a progressive task unit structure as described hereinabove, the planning module is configured to generate an MDP. An MDP is defined as (S; A; T; R), with S is a finite set of states of the autonomous system 200, A is a finite set of actions, T (s; $a_c$; $s_f$) a transition function denoting the probability for going from state s to state $s_f$ using action $a_c$, and R (s; $a_c$; $s_f$) a reward function expressing an expected gain for using action $a_c$ in state s and arriving in state $s_f$. The reward function may be based on the execution score of a corresponding executable module.

An MDP may be defined based on a progressive task unit structure as described in A *practical framework for robust decision-theoretic planning and execution for service robots* (L. Iocchi *et al.,* 2016), a content of which being incorporated by reference. Formally, an output of the planning module at operation 510 may be a

$$\text{MDP} = \langle\, s_0^0;\ \text{G};\ \{\langle s_i^j;\ m_i^j;\ \text{SS}_i^j\rangle\}\,\rangle$$, where $s_0^0$ is the initial state, G is a set of final states, and in each tuple

$\langle s_i^j, m_i^j, SS_i^j \rangle$, $s_i^j$ is a state defined by $s_i^j = [\alpha_i^j, X_1, \dots, X_{|X|}]$, $m_i^j$ is the action to be executed in this state and corresponding to an executable module in the progressive task unit structure, $SS_i^j$ is a set of pairs ($s_i^k$, $\alpha_i^k.\psi$), with $s_i^k$ being a successor state and $\alpha_i^k.\psi$ is the execution condition declared in the progressive task unit structure and associated to the corresponding outcome.

The planning module is further configured to define an executable action strategy based on the MDP at operation 520. The planning module may be configured to determine a global execution score, the global execution score being a combination of the execution scores associated with the executable modules corresponding to the states of the MDP. In this embodiment, the execution scores are weighted by the execution probabilities of the respective executable modules. In the same or another embodiment, the executable action strategy is defined by solving a Bellman equation given as follows:

$$V(s) = MAX_{\{m \in A\}} [R(s) + \sum \lambda T(s,a,s').V(s')]$$

V is an expected value function representing the expected gain in acting with an action $a_c$ at state s and R and T are respectively the reward and transition functions.

Classical algorithms such as *Value Iteration* [Richard Bellman. A markovian decision process. Indiana Univ. Math. J.] or *Policy Iteration* [R.A. Howard. Dynamic Programming and Markov Processes] are configured to compute an optimal action strategy, or "optimal policy" efficiently.

Figure 6 is representation of an action strategy 600 in accordance with one embodiment of the present technology. The action strategy 600 corresponds to the illustrative progressive task unit structure 300. The state $s_0^0$ being the initial state and $G = \{s_4^1\}$ the set of goal states. The representation 600 comprises the states 610 of the MDP, their corresponding actions 620 and their corresponding sets $SS_j$ described hereinbefore 630.

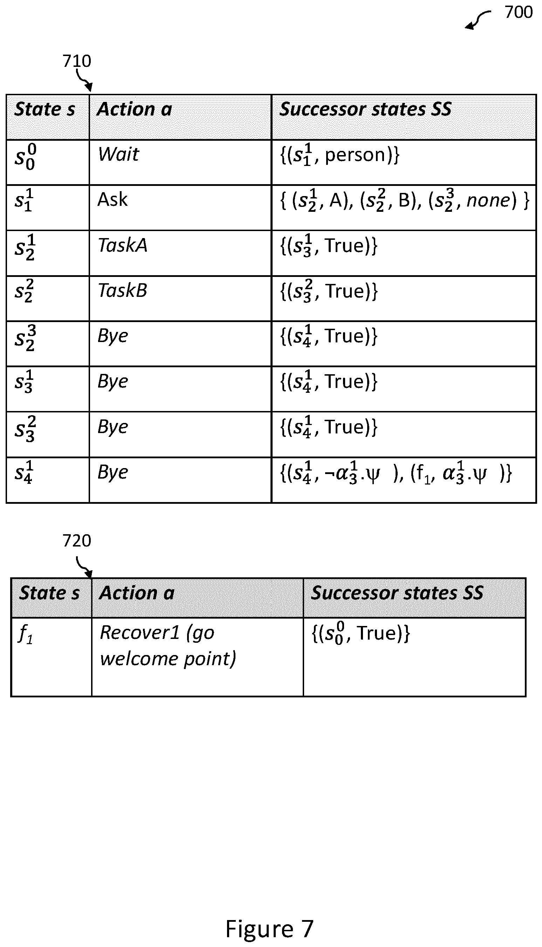

As described hereinbefore, the failure recovery modules of a progressive task unit structure may define failure states of the autonomous system 200. Figure 7 is a representation of an action strategy 700 in accordance with one embodiment of the present technology. A first portion 710 of the action strategy comprises states corresponding to executables modules of the progressive task unit, or "safe" states, and a second portion 720 of the action strategy comprises failure states corresponding to failure recovery modules of the progressive task unit, referred to as "unsafe states", or "failure states". In one embodiment, the first portion 710 and the second portion 720 may correspond to two different action strategies and/or two different progressive task unit structures that may be independently executed. Separating the safe states from the failure states helps to reduce the set of state variables during execution of the action strategy and increase the scalability of the present technology.

Failure recovery modules may correspond either to resource-bounded actions to be performed by the autonomous system 200 or to distinct progressive task unit structure, or "failure recovery progressive task unit structure". In other words, if determination is made that the autonomous system 200 is in an unsafe state corresponding to a failure recovery module of a first progressive task unit structure, a second progressive task unit structure (e.g. failure recovery progressive task unit structure) may be executed. The second progressive task unit structure may comprise a hierarchy of resource-bounded actions to be performed to recover from the failure corresponding to the unsafe state of the autonomous system. A second action strategy may be generated from the second progressive task unit structure and further executed in a similar fashion to what is described hereinbefore. It can be said that failure recovery modules corresponding to resource-bounded actions to be performed by the autonomous system 200 are representative of "partial failure states" of the autonomous system 200, and that failure recovery modules that cause execution, by the computer system 210, of failure recovery progressive task unit structure are representative of "total failure states" of the autonomous system 200.

In the illustrative example of Figure 6, the autonomous system is configured to endlessly repeat the action "Bye" which may be an undesirable behavior, or a "failure state". In Figure 7, a state variable ByeCounter has been added to the corresponding progressive task unit structure to cause the system to transit to a failure state $f_1$ when the execution condition $\alpha_3^1.\psi$ (ByeCounter = 3) is true. Therefore, a specific action may be performed by the autonomous system 200 when determination is made by the planning module that the execution condition $\alpha_3^1.\psi$ is true.

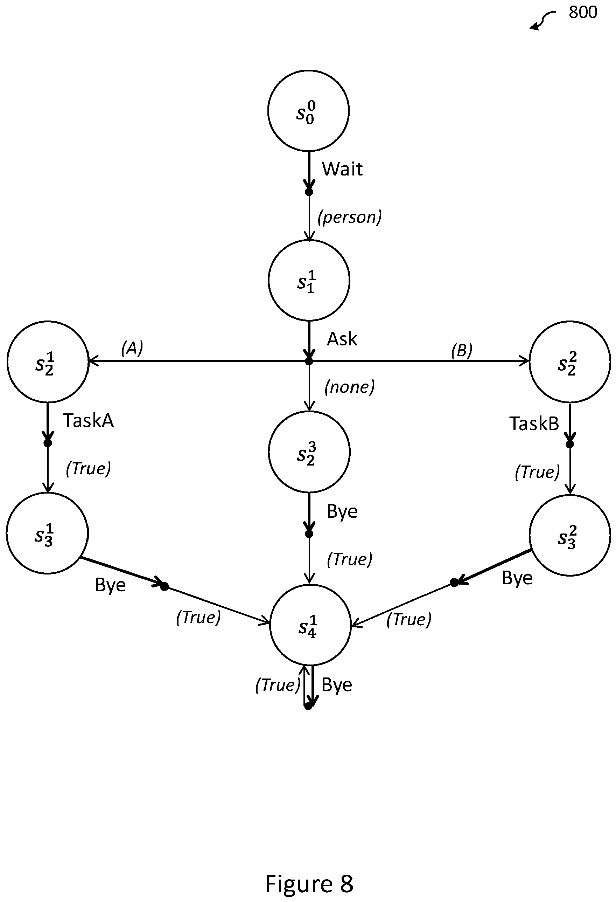

Figure 8 is finite-state machine of the action strategy 600 in accordance with one embodiment of the present technology. In this illustrative embodiment, the executable action strategy 600 is represented as an automaton with nodes representing the state $s_i^j$ of the autonomous system 200 and transition representing the execution of the executable action strategy actions $m_i^j$. In one embodiment, the action strategy may be configured to have a finite horizon, namely a maximal number of actions is set by the computer system 210, or an infinite horizon, namely an unlimited number of actions. The illustrative example of Figure 6 and Figure 8 illustrates an action strategy with an infinite horizon as the successor executable module of the final state is the final state itself. An infinite horizon is a configuration wherein the autonomous system 200 never completely ends an execution of the action strategy by transiting from one state to others infinitely as depicted in Figure 8.

Using the sub-sets of state variables corresponding to the executable modules may facilitate a generation of an action strategy. Indeed, the computer system may select executable modules that correspond to a sub-set of state variables in the corresponding progressive task unit structure and generate the action strategy based only on those executable modules. For instance, while searching for a person by the autonomous system 200 (e.g. during execution of an action strategy based on an objective indicating that said person is to be searched), if determination is made that the battery is LOW, the computer system 210 may consider only nodes of said action strategy that correspond to executable modules comprising the state variable: battery: LOW. Indeed, in this situation, the autonomous system 200 may not be able to perform actions requiring a high level of battery. For this reason, the sub-sets of state variables may be called "focalisation variables" as other state variables may not be considered at execution time. For example, use of the focalisation variables of the executable modules reduces an action strategy from 500.000 nodes to 100.000 nodes.

Upon definition of the action strategy by, for instance, defining the semantic map of Figure 8, the planning module is configured to further transmit the executable action strategy to the execution module. The execution module is configured to execute the action strategy via the interaction unit 220. In the same or another embodiment, the execution module may be communicably connected to the perception unit 212 to determine the state variables X = {$X_1$, $X_2$, ..., $X_{|X|}$}, and thereby a current state $s_i^j$ of the autonomous system 200. The interaction unit 220 operates physical and/or logical actuators, mechanisms, devices or any element that is configured to cause the autonomous system 200 to interact with the environment 230.

The execution module may be configured to execute the executable action strategy by browsing the action strategy from the initial state. The list of successor states of each state of the MDP may be generated according to the progressive task unit structure as described hereinabove and may be comprised in the action strategy. Thus, execution conditions $\alpha_i^k.\psi$ over observable environment properties of the environment 230 may be assessed by the perception unit 212 during execution of the action strategy. Upon determining in which first state $,s_i^j$ the autonomous system 200 is, the execution module may be configured to perform the corresponding action $_{|}m_i^j$. Once this action has been performed, the execution module may be configured to determine a new state $s_i^j$ of the autonomous system 200, using the perception unit 212 for instance, among the successor states of the first state $s_i^j$.

Upon determining that the autonomous system is in a final state comprised in G, the execution module is configured to terminate the execution of the plan and return a first signal to the computer system 210 indicating that execution of the action strategy is complete.

While the above-described implementations have been described and shown with reference to particular steps performed in a particular order, it will be understood that these steps may be combined, sub-divided, or re-ordered without departing from the teachings of the present technology. At least some of the steps may be executed in parallel or in series. Accordingly, the order and grouping of the steps is not a limitation of the present technology.

It should be expressly understood that not all technical effects mentioned herein need to be enjoyed in each and every embodiment of the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A computer-implemented method for generating an action strategy (600, 700) to be executed by an autonomous system (200), the action strategy (600, 700) comprising a series of actions to be performed by the autonomous system (200) to accomplish a corresponding active objective, the series of actions comprising one or more resource-bounded actions to be performed by the autonomous system (200) if the autonomous system (200) has limited resources to accomplish the active objective, the autonomous system (200) comprising one or more sensing devices (212) configured to sense pre-determined state variables, the state variables defining a state of the autonomous system (200), the method comprising:

accessing a first database populated with event descriptions corresponding to events detected by the autonomous system (200), the events occurring or having occurred in an environment where the autonomous system (200) is configured to operate;

accessing a second database populated with candidate objectives, each candidate objective defining a task accomplishable by the autonomous system (200) and comprising:

an activation condition corresponding to one or more event descriptions, the activation condition being fulfilled if determination is made that the corresponding one or more event descriptions are found in the first database; and

a progressive task unit structure (300) describing a hierarchy of actions to be performed in order to accomplish the corresponding candidate objective, the progressive task unit structure (300) comprising executable modules (312, 322, 332, 334, 336, 338, 342) configured to be executed by the autonomous system (200), each executable module (312, 322, 332, 334, 336, 338, 342) corresponding to an action of the hierarchy of actions and being associated with a given state of the autonomous system (200), at least one progressive task unit structure (300) comprising at least one failure recovery module corresponding to a resource-bounded action to be performed in response to a given failure state of the autonomous system being detected by the one or more sensing devices (212) while performing an action strategy (600, 700), the executable modules (312, 322, 332, 334, 336, 338, 342) and failure recovery modules being associated with a execution score indicative of which executables modules (312, 322, 332, 334, 336, 338, 342) should be preferentially executed during performance of the action strategy (600, 700);

selecting one or more candidate objectives from the second database by determining whether the activation conditions of the one or more candidate objectives are fulfilled based on the event descriptions;

executing the selected one or more candidate objectives, an execution of a candidate objective comprising:

transferring parameters of at least one of the event descriptions that caused the selection of the candidate objective to the selected candidate objective, thereby generating the active objective;

generating an action strategy (600, 700) from the progressive task unit structure (300), the action strategy (600, 700) comprising information about actions to be performed according to a state of the autonomous system (200) such that, upon detection of a failure state of the autonomous system (200), a corresponding resource bounded-action is executed, the series of actions of the action strategy (600, 700) being based on the execution scores of the executable modules (312, 322, 332, 334, 336, 338, 342) and failure recovery modules; and

executing the series of actions of the action strategy based on the state of the autonomous system (200).

2. The method of claim 1, wherein event descriptions of the first database correspond to abnormal events detected by the autonomous system (200), each of the abnormal events being identified as incoherent based on a result of a coherence checking procedure between an event description of the corresponding event and properties of the environment, and wherein accessing the first database is made in response to detecting, by the autonomous system (200), an abnormal event.

3. The method of claim 1 or 2, wherein the progressive task unit structures (300) further comprise:

one or more sequence of processing levels, each sequence of processing levels comprising one or more of the executable modules (312, 322, 332, 334, 336, 338, 342);
a set of state variables describing parameters of a state of an execution of the candidate objective;
a set of observable properties, an observable property corresponding to one or more of the event descriptions of the first database;
or a combination thereof.

4. The method of claim 3, wherein each executable module (312, 322, 332, 334, 336, 338, 342) of the progressive task unit structures (300) corresponds to configuration of a sub-set of state variables of the set of state variables of the corresponding progressive task unit structure (300), and, if determination is made that, for a given executable module (312, 322, 332, 334, 336, 338, 342), a corresponding configuration is not fulfilled upon execution of the action corresponding to the given executable module (312, 322, 332, 334, 336, 338, 342), said action is identified as a failure of the autonomous system (200).

5. The method of any one of claims 1 to 4, wherein the at least one of the candidate objective further comprises one or more failure recovery progressive task unit structures comprising a hierarchy of resource-bounded actions to be performed, each failure recovery progressive task unit structure corresponding to a failure recovery module of a progressive task unit structure (300), execution of the failure recovery module causing an execution of the resource-bounded actions of the failure recovery progressive task unit structure by the autonomous system (200).

6. The method of any one of claims 1 to 5, wherein the executable modules (312, 322, 332, 334, 336, 338, 342) are further associated with an execution score for executing corresponding executable modules (312, 322, 332, 334, 336, 338, 342), and generating the executable action strategy comprises maximizing a global execution score, the global execution score being a combination of the execution scores associated with the executable modules (312, 322, 332, 334, 336, 338, 342).

7. The method of claim 6, wherein the execution scores of the executable modules (312, 322, 332, 334, 336, 338, 342) are weighted by execution probabilities of the corresponding executable modules (312, 322, 332, 334, 336, 338, 342) for determining the global execution score, an execution probability describing a probability of an execution of the corresponding executable module (312, 322, 332, 334, 336, 338, 342) by the autonomous system (200).

8. The method any of claims 1 to 7, wherein generating the action strategy (600, 700) from the progressive task unit structure (300) of the candidate objective comprises:

generating a stochastic decision process from the progressive task unit structure (300), the stochastic decision process comprising at least:

a set of actions corresponding to the actions of the executable modules (312, 322, 332, 334, 336, 338, 342) of the progressive task unit structure; and
a set of states comprising states of the autonomous system (200), each state corresponding to an outcome of an execution of an executable module (312, 322, 332, 334, 336, 338, 342);

and
executing the stochastic decision process.

9. The method of claim 8, wherein the stochastic decision process is a factored Markov decision process.

10. The method of any of claims 1 to 9, wherein one or more actions corresponding to the executable modules (312, 322, 332, 334, 336, 338, 342) cause an execution of one or more candidate objectives.

11. A system for generating an action strategy to be executed by an autonomous system (200), the system comprising a processor (110) and a memory (130) configured to store instructions which, upon being executed by the processor (110), cause the system to perform the methods of any one of claims 1 to 10.

12. A non-transitory computer-readable medium comprising computer-readable instructions that, upon being executed by a system, cause the system to perform method of any one of claims 1 to 10.

**Patentansprüche**

1. Computerimplementiertes verfahren zum Erstellen einer handlungsstrategie (600, 700), die von einem autonomen system (200) ausgeführt werden soll, wobei die handlungsstrategie (600, 700) eine reihe von auszuführenden handlungen umfasst, die vom autonomen system (200) durchgeführt werden, um ein entsprechendes aktives ziel zu erreichen, die reihe von handlungen, die eine oder mehrere ressourcenbegrenzte handlungen umfassen, die vom autonomen system (200) durchgeführt werden, wenn das autonome system (200) über begrenzte ressourcen verfügt, um das aktive ziel zu erreichen, umfassend einen oder mehrere sensoren (212), konfiguriert zur erfassung

14

vorgegebener zustandsvariablen, wobei die zustandsvariablen einen zustand des autonomen systems (200) definieren, und das verfahren folgendes umfasst:

Zugreifen auf eine erste Datenbank, in die Ereignisbeschreibungen eingepflegt sind, die Ereignissen entsprechen, die von dem autonomen System (200) erfasst werden,
wobei die Ereignisse in einer Umgebung auftreten oder aufgetreten sind, in der das autonome System (200) für den Betrieb konfiguriert ist;
Zugreifen auf eine zweite Datenbank, in die Kandidatenvorgaben eingepfegt sind, wobei jede Kandidatenzielvorgabe eine Aufgabe definiert, die durch das autonome System (200) realisierbar ist,
und Folgendes umfassend:

eine Aktivierungsbedingung, die einer oder mehreren Ereignisbeschreibungen entspricht, wobei die Aktivierungsbedingung erfüllt ist, wenn bestimmt wird, dass die entsprechende eine oder mehreren Ereignisbeschreibungen in der ersten Datenbank gefunden werden; und
eine progressive Task-Unit-Struktur (300), die eine Handlungshierarchie beschreibt, die durchgeführt werden sollen, um die entsprechende Kandidatenzielvorgabe zu erreichen, wobei die progressive Task-Unit-Struktur (300) ausführbare Module (312, 322, 332, 334, 336, 338, 342) umfasst, die konfiguriert sind, um durch das autonome System (200) ausgeführt zu werden,
wobei jedes ausführbare Modul (312, 322, 332, 334, 336, 338, 342) einer Handlung der Handlungshierarchie entspricht und einem bestimmten Zustand des autonomen Systems (200) zugeordnet ist, wobei mindestens eine progressive Task-Unit-Struktur (300) mindestens ein Fehlerwiederherstellungsmodul umfasst, das einer ressourcenbegrenzten Handlung entspricht, die als Reaktion auf einen bestimmten Fehlerzustand des autonomen Systems durchgeführt werden soll, wobei die eine oder mehreren Erfassungsvorrichtungen (212) unter Durchführung einer Handlungsstrategie (600, 700) die ausführbaren Module (312, 322, 332, 334, 336, 338, 342) erfassen, und Fehlerwiederherstellungsmodule einer Ausführungsbewertung zugeordnet sind, die angibt, welche ausführbaren Module (312, 322, 332, 334, 336, 338, 342) während der Durchführung der Handlungsstrategie (600, 700) bevorzugt ausgeführt werden sollen;
Auswählen einer oder mehrerer Kandidatenzielvorgaben aus der zweiten Datenbank durch Bestimmen, ob die Aktivierungsbedingungen des einen oder der mehreren Kandidatenzielvorgaben basierend auf den Ereignisbeschreibungen erfüllt sind;
Ausführen des ausgewählten einen oder der mehreren Kandidatenzielvorgaben, wobei eine Ausführung einer Kandidatenzielvorgabe Folgendes umfasst:

Übertragen von Parametern mindestens einer der Ereignisbeschreibungen, die die Auswahl der Kandidatenzielvorgabe verursacht haben, auf die ausgewählte Kandidatenzielvorgabe, wodurch das aktive Ziel erzeugt wird;
Generieren einer Handlungsstrategie (600, 700) aus der progressiven Task-Unit-Struktur (300), wobei die Handlungsstrategie (600, 700) Informationen über auszuführende Handlungen gemäß einem Zustand des autonomen Systems (200) umfasst, sodass bei Erkennung eines Fehlerzustands des autonomen Systems (200) eine entsprechende ressourcenbegrenzte Handlung ausgeführt wird, wobei die Handlungsreihe der Handlungsstrategie (600, 700) auf den Ausführungsbewertungen der ausführbaren Module (312, 322, 332, 334, 336, 338, 342) und Fehlerwiederherstellungsmodulen basiert; und
Ausführen der Handlungsreihe der Handlungsstrategie auf Grundlage des Zustands des autonomen Systems (200).

2. Verfahren nach Anspruch 1, wobei Ereignisbeschreibungen der ersten Datenbank abnormalen Ereignissen entsprechen, die durch das autonome System (200) erfasst werden, wobei jedes der abnormalen Ereignisse als inkohärent identifiziert wird, basierend auf einem Ergebnis einer Kohärenzüberprüfungsprozedur zwischen einer Ereignisbeschreibung des entsprechenden Ereignisses und Eigenschaften der Umgebung, und wobei das Zugreifen auf die erste Datenbank als Reaktion auf das Erfassen, durch das autonome System (200), eines abnormalen Ereignisses erfolgt.

3. Verfahren nach Anspruch 1 oder 2, wobei die progressiven Task-Unit-Strukturen (300) ferner umfassen:

eine oder mehrere Folgen von Verarbeitungsebenen, wobei jede Folge von Verarbeitungsebenen ein oder mehrere der ausführbaren Module (312, 322, 332, 334, 336, 338, 342) umfasst;
einen Satz von Zustandsvariablen, die Parameter eines Zustands einer Ausführung der Kandidatenzielvorgabe beschreiben;

einen Satz von beobachtbaren Eigenschaften, wobei eine beobachtbare Eigenschaft einer oder mehreren der Ereignisbeschreibungen der ersten Datenbank entspricht; oder eine Kombination davon.

4. Verfahren nach Anspruch 3, wobei jedes ausführbare Modul (312, 322, 332, 334, 336, 338, 342) der progressiven Task-Unit-Strukturen (300) einer Konfiguration einer Teilmenge von Zustandsvariablen der Menge von Zustandsvariablen der entsprechenden progressiven Task-Unit-Struktur (300) entspricht, und, wenn bestimmt wird, dass, für ein gegebenes ausführbares Modul (312, 322, 332, 334, 336, 338, 342) eine entsprechende Konfiguration bei Ausführung der Handlung, die dem gegebenen ausführbaren Modul (312, 322, 332, 334, 336, 338, 342) entspricht, nicht erfüllt ist, diese Handlung als Fehler des autonomen Systems (200) erkannt wird.

5. Verfahren nach einem der Ansprüche 1 bis 4, wobei das zumindest eine der Kandidatenzielvorgaben ferner eine oder mehrere progressive Task-Unit-Strukturen der Fehlerwiederherstellung umfasst, die eine Hierarchie von ressourcengebundenen Handlungen umfassen, die auszuführen sind, wobei jede progressive Task-Unit-Struktur der Fehlerwiederherstellung einem Fehlerwiederherstellungsmodul einer progressiven Task-Unit-Struktur (300) entspricht, wobei die Ausführung des Fehlerwiederherstellungsmoduls eine Ausführung der ressourcengebundenen Handlungen der progressiven Task-Unit-Struktur der Fehlerwiederherstellung durch das autonome System (200) bewirkt.

6. Verfahren nach einem der Ansprüche 1 bis 5, wobei die ausführbaren Module (312, 322, 332, 334, 336, 338, 342) ferner einer Ausführungsbewertung für die Ausführung entsprechender ausführbarer Module (312, 322, 332, 334, 336, 338, 342) zugeordnet sind und das Erzeugen der ausführbaren Handlungsstrategie das Maximieren einer globalen Ausführungsbewertung umfasst, wobei die globale Ausführungsbewertung eine Kombination der Ausführungsbewertungen ist, die den ausführbaren Modulen (312, 322, 332, 334, 336, 338, 342) zugeordnet sind.

7. Verfahren nach Anspruch 6, wobei die Ausführungsbewertungen der ausführbaren Module (312, 322, 332, 334, 336, 338, 342) durch Ausführungswahrscheinlichkeiten der entsprechenden ausführbaren Module (312, 322, 332, 334, 336, 338, 342) gewichtet, um die globale Ausführungsbewertung zu bestimmen, wobei eine Ausführungswahrscheinlichkeit die Wahrscheinlichkeit einer Ausführung des entsprechenden ausführbaren Moduls (312, 322, 332, 334, 336, 338, 342) durch das autonome System (200) beschreibt.

8. Verfahren nach einem der Ansprüche 1 bis 7, wobei das Erzeugen der Handlungsstrategie (600, 700) aus der progressiven Task-Unit-Struktur (300) der Kandidatenzielvorgabe Folgendes umfasst:
Erzeugen eines stochastischen Entscheidungsprozesses aus der progressiven Task-Unit-Struktur (300), wobei der stochastische Entscheidungsprozess mindestens Folgendes umfasst:

einen Satz von Handlungen, die den Handlungen der ausführbaren Module (312, 322, 332, 334, 336, 338, 342) der progressiven Task-Unit-Struktur entsprechen; und
einen Satz von Zuständen, die Zustände des autonomen Systems (200) umfassen, wobei jeder Zustand einem Ergebnis einer Ausführung eines ausführbaren Moduls (312, 322, 332, 334, 336, 338, 342) entspricht; und
Ausführen des stochastischen Entscheidungsprozesses.

9. Verfahren nach Anspruch 8, wobei der stochastische Entscheidungsprozess ein faktorieller Markov-Entscheidungsprozess ist.

10. Verfahren nach einem der Ansprüche 1 bis 9, wobei eine oder mehrere Handlungen, die den ausführbaren Modulen (312, 322, 332, 334, 336, 338, 342) entsprechen, eine Ausführung eines oder mehrerer Kandidatenzielvorgaben bewirken.

11. System für das Generieren einer Handlungsstrategie, die von einem autonomen System (200) auszuführen ist, wobei das System einen Prozessor (110) und einen Speicher (130) umfasst, der konfiguriert ist, um Anweisungen zu speichern, die, wenn sie von dem Prozessor (110) ausgeführt werden, das System veranlassen, die Verfahren nach einem der Ansprüche 1 bis 10 durchzuführen.

12. Nicht-transitorisches computerlesbares Medium, das computerlesbare Anweisungen umfasst, die, wenn sie von einem System ausgeführt werden, das System veranlassen, das Verfahren nach einem der Ansprüche 1 bis 10 durchzuführen.

**Revendications**

1. Procédé mis en œuvre par ordinateur pour générer une stratégie d'action (600, 700) à exécuter par un système autonome (200), la stratégie d'action (600, 700) comprenant une série d'actions à exécuter par le système autonome (200) pour accomplir un objectif actif correspondant, la série d'actions comprenant une ou plusieurs actions limitées par les ressources à exécuter par le système autonome (200) si le système autonome (200) a des ressources limitées pour accomplir l'objectif actif, le système autonome (200) comprenant un ou plusieurs dispositifs de détection (212) configurés pour détecter des variables d'état prédéterminées, les variables d'état définissant un état le système autonome (200), le procédé comprenant :

   l'accès à une première base de données remplie de descriptions d'événements correspondant à des événements détectés par le système autonome (200), les événements se produisant ou s'étant produits dans un environnement où le système autonome (200) est configuré pour fonctionner ;
   l'accès à une seconde base de données remplie d'objectifs candidats, chaque objectif candidat définissant une tâche réalisable par le système autonome (200) et comprenant :

      une condition d'activation correspondant à une ou plusieurs descriptions d'événements, la condition d'activation étant remplie s'il est déterminé que les une ou plusieurs descriptions d'événements correspondantes se trouvent dans la première base de données ; et
      une structure d'unité de tâche progressive (300) décrivant une hiérarchie d'actions à effectuer afin d'accomplir l'objectif candidat correspondant, la structure d'unité de tâche progressive (300) comprenant des modules exécutables (312, 322, 332, 334, 336, 338, 342) configurés pour être exécutés par le système autonome (200), chaque module exécutable (312, 322, 332, 334, 336, 338, 342) correspondant à une action de la hiérarchie d'actions et étant associé à un état donné du système autonome (200), au moins une structure d'unité de tâche progressive (300) comprenant au moins un module de récupération en cas de défaillance correspondant à une action limitée par les ressources à effectuer en réponse à un état de défaillance donné du système autonome détecté par l'un ou les plusieurs dispositifs de détection (212) lors de l'exécution d'une stratégie d'action (600, 700), les modules exécutables (312, 322, 332, 334, 336, 338, 342) et des modules de récupération en cas de défaillance associés à un score d'exécution indiquant quels modules exécutables (312, 322, 332, 334, 336, 338, 342) doivent être exécutés de préférence pendant l'exécution de la stratégie d'action (600, 700) ;
      la sélection d'un ou plusieurs objectifs candidats dans la seconde base de données en déterminant si les conditions d'activation de l'un ou des plusieurs objectifs candidats sont remplies sur la base des descriptions d'événements ;
      l'exécution des un ou plusieurs objectifs candidats sélectionné, une exécution d'un objectif candidat comprenant :

         le transfert des paramètres d'au moins l'une des descriptions d'événements qui ont provoqué la sélection de l'objectif candidat à l'objectif candidat sélectionné, générant ainsi l'objectif actif ;
         la génération d'une stratégie d'action (600, 700) à partir de la structure d'unité de tâche progressive (300), la stratégie d'action (600, 700) comprenant des informations sur des actions à effectuer selon un état du système autonome (200) de telle sorte que, lors de la détection d'un état de défaillance du système autonome (200), une action limitée par les ressources correspondante est exécutée, la série d'actions de la stratégie d'action (600, 700) étant basée sur les scores d'exécution des modules exécutables (312, 322, 332, 334, 336, 338, 342) et des modules de récupération en cas de défaillance ; et
         l'exécution de la série d'actions de la stratégie d'action en fonction de l'état du système autonome (200).

2. Procédé selon la revendication 1, dans lequel les descriptions d'événements de la première base de données correspondent à des événements anormaux détectés par le système autonome (200), chacun des événements anormaux étant identifié comme incohérent sur la base d'un résultat d'une procédure de vérification de cohérence entre une description d'événement de l'événement correspondant et des propriétés de l'environnement, et dans lequel l'accès à la première base de données est effectué en réponse à la détection, par le système autonome (200), d'un événement anormal.

3. Procédé selon la revendication 1 ou 2, dans lequel les structures d'unités de tâches progressives (300) comprennent également :

   une ou plusieurs séquences de niveaux de traitement, chaque séquence de niveaux de traitement comprenant l'un ou plusieurs des modules exécutables (312, 322, 332, 334, 336, 338, 342) ;

un ensemble de variables d'état décrivant les paramètres d'un état d'une exécution de l'objectif candidat ;

un ensemble de propriétés observables, une propriété observable correspondant à l'une ou plusieurs des descriptions d'événements de la première base de données ;

ou une combinaison de ceux-ci.

4. Procédé selon la revendication 3, dans lequel chaque module exécutable (312, 322, 332, 334, 336, 338, 342) des structures d'unités de tâches progressives (300) correspond à une configuration d'un sous-ensemble de variables d'état de l'ensemble de variables d'état de la structure d'unités de tâches progressives correspondante (300), et, s'il est déterminé que, pour un module exécutable donné (312, 322, 332, 334, 336, 338, 342), une configuration correspondante n'est pas remplie lors de l'exécution de l'action correspondante au module exécutable donné (312, 322, 332, 334, 336, 338, 342), ladite action est identifiée comme une défaillance du système autonome (200) .

5. Procédé selon l'une quelconque des revendications 1 à 4, dans lequel l'au moins un des objectifs candidats comprend également l'une ou plusieurs des structures d'unité de tâche progressive de récupération en cas de défaillance comprenant une hiérarchie d'actions limitées par les ressources à effectuer, chaque structure d'unité de tâche progressive de récupération en cas de défaillance correspondant à un module de récupération en cas de défaillance d'une structure d'unité de tâche progressive (300), l'exécution du module de récupération en cas de défaillance provoquant une exécution des actions limitées par les ressources de la structure d'unité de tâche progressive de récupération en cas de défaillance par le système autonome (200) .

6. Procédé selon l'une quelconque des revendications 1 à 5, dans lequel les modules exécutables (312, 322, 332, 334, 336, 338, 342) sont également associés à un score d'exécution pour l'exécution des modules exécutables correspondants (312, 322, 332, 334, 336, 338, 342), et la génération de la stratégie d'action exécutable comprend la maximisation d'un score d'exécution global, le score d'exécution global étant une combinaison des scores d'exécution associés aux modules exécutables (312, 322, 332, 334, 336, 338, 342).

7. Procédé selon la revendication 6, dans lequel les scores d'exécution des modules exécutables (312, 322, 332, 334, 336, 338, 342) sont pondérés par des probabilités d'exécution des modules exécutables correspondants (312, 322, 332, 334, 336, 338, 342) pour déterminer le score d'exécution global, une probabilité d'exécution décrivant une probabilité d'une exécution du module exécutable correspondant (312, 322, 332, 334, 336, 338, 342) par le système autonome (200).

8. Procédé selon l'une quelconque des revendications 1 à 7, dans lequel la génération de la stratégie d'action (600, 700) à partir de la structure d'unité de tâche progressive (300) de l'objectif candidat comprend :
la génération d'un processus de décision stochastique à partir de la structure d'unité de tâche progressive (300), le processus de décision stochastique comprenant au moins :

un ensemble d'actions correspondant aux actions des modules exécutables (312, 322, 332, 334, 336, 338, 342) de la structure d'unité de tâches progressives ; et

un ensemble d'états comprenant des états du système autonome (200), chaque état correspondant à un résultat d'une exécution d'un module exécutable (312, 322, 332, 334, 336, 338, 342) ; et

l'exécution du processus de décision stochastique.

9. Procédé selon la revendication 8, dans lequel le processus de décision stochastique est un processus de décision de Markov factorisé.

10. Procédé selon l'une quelconque des revendications 1 à 9, dans lequel l'une ou plusieurs des actions correspondant aux modules exécutables (312, 322, 332, 334, 336, 338, 342) provoquent une exécution de l'un ou plusieurs objectifs candidats.

11. Système de génération d'une stratégie d'action à exécuter par un système autonome (200), le système comprenant un processeur (110) et une mémoire (130) configurée pour stocker des instructions qui, une fois exécutées par le processeur (110), amènent le système à exécuter les procédés selon l'une quelconque des revendications 1 à 10.

12. Support non transitoire lisible par ordinateur comprenant des instructions lisibles par ordinateur qui, une fois exécutées par un système, amènent le système à exécuter le procédé selon l'une quelconque des revendications 1 à 10.

Figure 1

Figure 2

Figure 3

400

| 410 | 420 | 430 | 440 | 450 |

| Module (name) | Module (name) | Execution Condition | Probability | Successor |
|---|---|---|---|---|
| $m_0^1$ (Wait) | $\alpha_0^1$ | Personn | 1 | $m_1^1$ |
| $m_1^1$ (Ask) | $\alpha_1^1$ | A | 0.4 | $m_2^1, m_2^2$ |
| $m_1^1$ (Ask) | $\beta_1^1$ | B | 0.4 | $m_2^3, m_2^4$ |
| $m_1^1$ (Ask) | $\gamma_0^1$ | none | 0.2 | $m_4^1$ |
| $m_2^1$ (TaskA1) | $\alpha_2^1$ | | 1 | $m_4^1$ |
| $m_2^2$ (TaskA2) | $\alpha_2^2$ | | 1 | $m_4^1$ |
| $m_2^3$ (TaskB1) | $\alpha_2^3$ | | 1 | $m_4^1$ |
| $m_2^4$ (TaskB2) | $\alpha_2^4$ | | 1 | $m_4^1$ |
| $m_3^1$ (Bye) | $\alpha_3^1$ | | 1 | $m_4^1$ |

Figure 4

500

Generate a factored Markov decision
process (MDP) plan from the
progressive task unit structure

510

Generate an executable action strategy
from the MDP

520

Figure 5

600

610        620             630

| *State s* | *Action a* | *Successor states SS* |
|---|---|---|
| $s_0^0$ | *Wait* | $\{(s_1^1, \text{person})\}$ |
| $s_1^1$ | Ask | $\{ (s_2^1, \text{A}), (s_2^2, \text{B}), (s_2^3, \textit{none}) \}$ |
| $s_2^1$ | *TaskA* | $\{(s_3^1, \text{True})\}$ |
| $s_2^2$ | *TaskB* | $\{(s_3^2, \text{True})\}$ |
| $s_2^3$ | *Bye* | $\{(s_4^1, \text{True})\}$ |
| $s_3^1$ | *Bye* | $\{(s_4^1, \text{True})\}$ |
| $s_3^2$ | *Bye* | $\{(s_4^1, \text{True})\}$ |
| $s_4^1$ | *Bye* | $\{(s_4^1, \text{True})\}$ |

Figure 6

700

710

| State s | Action a | Successor states SS |
|---------|----------|---------------------|
| $s_0^0$ | Wait | $\{(s_1^1, \text{person})\}$ |
| $s_1^1$ | Ask | $\{ (s_2^1, A), (s_2^2, B), (s_2^3, none) \}$ |
| $s_2^1$ | TaskA | $\{(s_3^1, \text{True})\}$ |
| $s_2^2$ | TaskB | $\{(s_3^2, \text{True})\}$ |
| $s_2^3$ | Bye | $\{(s_4^1, \text{True})\}$ |
| $s_3^1$ | Bye | $\{(s_4^1, \text{True})\}$ |
| $s_3^2$ | Bye | $\{(s_4^1, \text{True})\}$ |
| $s_4^1$ | Bye | $\{(s_4^1, \neg\alpha_3^1.\psi\ ), (f_1, \alpha_3^1.\psi\ )\}$ |

720

| State s | Action a | Successor states SS |
|---------|----------|---------------------|
| $f_1$ | Recover1 (go welcome point) | $\{(s_0^0, \text{True})\}$ |

Figure 7

800

Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130080360